# EUROPEAN PATENT SPECIFICATION

(11) **EP 3 992 248 B1**
(45) Date of publication and mention of the grant of the patent: **07.08.2024**
(21) Application number: 20833000.1
(22) Date of filing: 26.06.2020
(51) Int. Cl.: C08L 69/00, C08L 67/02, C08L 51/04, C08L 23/08

(54) **THERMOPLASTIC RESIN COMPOSITION AND MOLDED PRODUCT USING SAME**
THERMOPLASTISCHE HARZZUSAMMENSETZUNG UND FORMPRODUKT DAMIT
COMPOSITION DE RÉSINE THERMOPLASTIQUE ET PRODUIT MOULÉ L'UTILISANT

(30) Priority: 28.06.2019 KR 20190077962
(43) Date of publication of application: 04.05.2022
(73) Proprietor: Lotte Chemical Corporation, Seoul, 05551 (KR)
(72) Inventor: KIM, Myunghun, Uiwang-si, Gyeonggi-do 16073 (KR); KWON, Keehae, Uiwang-si, Gyeonggi-do 16073 (KR); KIM, Younghyo, Uiwang-si, Gyeonggi-do 16073 (KR)
(74) Representative: Germain Maureau
(86) International application number: PCT/KR2020/008363
(87) International publication number: WO 2020/263015

(56) References cited:
- CN-A- 103 059 534
- KR-A- 20160 078 609
- KR-A- 20190 064 402
- KR-A- 20190 064 402
- KR-A- 950 001 641
- KR-B1- 101 958 884
- KR-B1- 101 958 884
- KANG TAEGON ET AL: "RESIN COMPOSITION AND ARTICLES MANUFACTURED USING THE SAME", KRA20180106136, 1 January 2019 (2019-01-01), pages 1 - 12, XP093051700, Retrieved from the Internet <URL:https://patentimages.storage.googleapis.com/f0/5e/6f/141c4fdbecff81/KR102029356B1.pdf> [retrieved on 20230605]

## Description

### [Technical Field]

A thermoplastic resin composition and a molded product using the same are disclosed.

### [Background Art]

A polycarbonate resin is one of engineering plastics, and is a material that is widely used in the plastics industry.

The polycarbonate resin has a glass transition temperature (Tg) of about 150 °C due to a bulk molecular structure, such as bisphenol-A, which shows high heat resistance and may be an amorphous polymer having excellent transparency.

KR101958884B1 discloses a thermoplastic resin composition comprising polycarbonate, polybutylene terephthalate and polyethylene terephthalate with improved chemical resistance, impact resistance and heat resistance.

Furthermore, although having excellent impact resistance and compatibility with other resins, polycarbonate resin has a drawback of low fluidity, so it is frequently used in a form of a compound with various resins for complementing moldability and post-processability.

Among them, a polycarbonate/acrylonitrile-butadiene-styrene (PC/ABS) compound has excellent durability, moldability, heat resistance, impact resistance, and the like, and thus may be applied in a wide range of applications such as an electrical/electronic field, an automobile field, a construction field, and other daily life materials.

However, the PC/ABS compound lacks chemical resistance to chemicals such as cosmetics and air fresheners used in vehicle interiors, so there is a risk of damage when applied to automobile interior materials.

On the other hand, polyester resin has improved moldability and, in particular, improved chemical resistance due to its crystallinity, but has low heat resistance and impact resistance due to a low glass transition temperature. Accordingly, polycarbonate/polyester (PC/polyester) compounds are being researched as an approach to supplement chemical resistance while maintaining improved durability, moldability, heat resistance, and impact resistance.

Recently, there has been an emerging need for automobile interior materials with enhanced low gloss properties for luxurious appearances. In order to realize the low gloss properties, a method of reducing surface gloss by introducing several micrometer-sized acrylic particles, an inorganic filler, or the like into a PC/polyester compound but may have a problem of greatly deteriorating impact resistance.

In addition, since volatile organic compounds (VOCs) may adversely affect a human body as well as generate unpleasant odors, there has been a recent movement to apply materials generating less VOCs to automobile interior materials and the like.

Accordingly, in order to solve the problems, development of a thermoplastic resin composition having excellent moldability, heat resistance, impact resistance, and low gloss properties and generating less volatile organic compounds, compared with the conventional PC/polyester compound or PC/ABS compound, prepared by adding several micrometer-sized acrylic particles, an inorganic filler, or the like, has been undertaken.

### [Disclosure]

### [Technical Problem]

A thermoplastic resin composition having improved moldability, heat resistance, impact resistance, and low gloss characteristics and generation of less volatile organic compounds, and a molded product using the same, are provided.

### [Technical Solution]

According to an embodiment, a thermoplastic resin composition includes 100 parts by weight of a base resin including: (A) 65 to 75 wt% of a polycarbonate resin, (B) 20 to 30 wt% of a polybutylene terephthalate resin, and (C) 3 to 7 wt% of a polyethylene terephthalate resin; (D) 3 to 7 parts by weight of a methylmethacrylate-butadiene-styrene graft copolymer; and (E) 1 to 5 parts by weight of a polyolefin-based polymer having a glycidyl group.

The (E) polyolefin-based polymer having the glycidyl group may include a homopolymer of an olefin having a glycidyl group, a copolymer of an unsaturated monomer having a glycidyl group and an olefin, or a combination thereof.

The olefin may include ethylene, propylene, 1-butene, isobutylene, 2-butene, cyclobutene, 1-pentene, 1-hexene, 4-methyl-1-pentene, 1-octene, 3-methyl-1-butene, 4-methyl-1-butene, cyclopentene, 1-hexene, cyclohexene, 1-octene, 1-decene, 1-dodecene, or a combination thereof.

The unsaturated monomer having the glycidyl group may include glycidyl(meth)acrylate, vinylglycidylether, allylglycidylether, methacrylglycidylether, 2-methylallylglycidylether, styrene-p-glycidylether, or a combination thereof.

The (E) polyolefin-based polymer having the glycidyl group may include an ethylene-glycidyl methacrylate copolymer.

The (A) polycarbonate resin may have a melt flow index of 1 to 15 g/10 min, which is measured under the condition of 300 °C and a 1.2 kg load according to ASTM D1238.

The (B) polybutylene terephthalate resin may have an intrinsic viscosity of 0.7 to 1.5 dl/g, which is measured according to ASTM D2857.

The (D) methyl methacrylate-butadiene-styrene graft copolymer may have a core-shell structure including a core composed of a butadiene-based rubbery polymer, and a shell formed by graft polymerization of methyl methacrylate and/or styrene on the core.

The thermoplastic resin composition may further include at least one additive selected from a flame retardant, a nucleating agent, a coupling agent, a glass fiber, a plasticizer, a lubricant, an inorganic filler, an antibacterial agent, a release agent, a heat stabilizer, an antioxidant, an ultraviolet stabilizer, an antistatic agent, a pigment, and a dye.

Meanwhile, a molded product using a thermoplastic resin composition according to an embodiment may be provided.

The molded product may have notched Izod impact strength of greater than or equal to 45 kgf cm/cm, which is measured at room temperature (23 °C) according to ASTM D256.

The molded product may have gloss of less than or equal to 50 GU, which is measured at an angle of 60 degrees according to ASTM D523.

The molded product may have a styrene emission amount of less than 30 ppm, which is measured using gas chromatography mass spectrometry (GC-MS) according to a Hyundai Motor Company MS300-55 standard.

### [Advantageous Effects]

The thermoplastic resin composition according to an embodiment and a molded product using the same may be widely applied to various molded products that are to be painted or not painted due to improved moldability, heat resistance, impact resistance, and low gloss characteristics as well as a low emission amount of volatile organic compounds. In particular, it may be usefully used for applications such as automobile interior materials.

### [Mode for Invention]

Hereinafter, embodiments of the present invention are described in detail. However, these embodiments are exemplary, the present invention is not limited thereto, and the present invention is defined by the scope of claims.

In the present invention, unless otherwise mentioned, the average particle diameter refers to a volume average diameter, and means a Z-average particle diameter measured using a dynamic light scattering analyzer.

According to an embodiment, a thermoplastic resin composition includes 100 parts by weight of a base resin including: (A) 65 to 75 wt% of a polycarbonate resin, (B) 20 to 30 wt% of a polybutylene terephthalate resin, and (C) 3 to 7 wt% of a polyethylene terephthalate resin; (D) 3 to 7 parts by weight of a methylmethacrylate-butadiene-styrene graft copolymer; and (E) 1 to 5 parts by weight of a polyolefin-based polymer having a glycidyl group.

Hereinafter, each component included in the thermoplastic resin composition will be described in detail.

### (A) Polycarbonate Resin

The polycarbonate resin is a polyester having a carbonate bond but has no particular limit in its type, and may include any polycarbonate resin usable in the resin composition field.

For example, it may be prepared by reacting diphenols represented by Chemical Formula 1 with a compound selected from phosgene, halogen acid esters, carbonate esters, and a combination thereof.

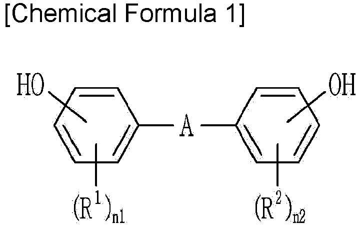

In Chemical Formula 1,
A is a linking group selected from a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, CO, S, and SO₂, wherein R¹ and R² are each independently a substituted or unsubstituted C1 to C30 alkyl group or a substituted or unsubstituted C6 to C30 aryl group, and n1 and n2 are each independently an integer of 0 to 4.

Two or more types of the diphenols represented by Chemical Formula 1 may be combined to constitute a repeating unit of the polycarbonate resin.

Specific examples of the diphenols may be hydroquinone, resorcinol, 4,4'-dihydroxydiphenyl, 2,2-bis(4-hydroxyphenyl)propane (also referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be desirably used. 2,2-bis(4-hydroxyphenyl)propane may be more desirably used.

The polycarbonate resin may be a mixture of copolymers obtained using two or more dipenols.

In addition, the polycarbonate resin may be a linear polycarbonate resin, a branched polycarbonate resin, a polyestercarbonate copolymer resin, and the like.

Specific examples of the linear polycarbonate resin may be a bisphenol-A polycarbonate resin. Specific examples of the branched polycarbonate resin may be a resin prepared by reacting a multi-functional aromatic compound such as trimellitic anhydride, trimellitic acid, and the like with diphenols and a carbonate. The polyestercarbonate copolymer resin may be prepared by reacting bifunctional carboxylic acid with diphenols and a carbonate, wherein the used carbonate is a diaryl carbonate such as diphenyl carbonate or ethylene carbonate.

The polycarbonate resin may have a weight average molecular weight of 10,000 to 200,000 g/mol, and for example, the polycarbonate resin may have a weight average molecular weight of 14,000 to 40,000 g/mol. When the weight average molecular weight of the polycarbonate resin is within the above range, a molded product using the same may obtain excellent impact resistance and fluidity.

The polycarbonate resin may be included in an amount of 65 to 75 wt%, and for example, may be included in an amount of 68 to 73 wt% based on 100 wt% of the base resin. When the polycarbonate resin is included at less than 65 wt%, mechanical strength is not good, and when it exceeds 75 wt%, moldability may be deteriorated.

The polycarbonate resin may have a melt flow index of 1 to 25 g/10 min, for example 1 to 20 g/10 min, 1 to 15 g/10 min, for example 1 to 12 g/10 min, or 1 to 10 g/10 min, which is measured under the condition of 300 °C and a 1.2 kg load according to ASTM D1238. When the polycarbonate resin having a melt flow index within the above range is used, a molded product using the same may exhibit excellent impact resistance as well as excellent moldability.

However, an embodiment is not necessarily limited thereto. For example, the polycarbonate resin may be used by mixing two or more types of polycarbonate resins having different weight average molecular weights or melt flow indexes. By mixing and using polycarbonate resins of different weight average molecular weights or melt flow indexes, the thermoplastic resin composition may be controlled to have desired fluidity.

### (B) Polybutylene Terephthalate Resin

The polybutylene terephthalate resin is generally a resin obtained from a polycondensation reaction of terephthalic acid or a derivative thereof and 1,4-butanediol or a derivative thereof, but may include a resin obtained by copolymerizing dicarboxylic acid, glycol, or the like within a scope of not impairing the purpose of the present invention.

Herein, examples of the copolymerizable dicarboxylic acid may include isophthalic acid, 2-chloroterephthalic acid, 2,5-dichloroterephthalic acid, 2-methylterephthalic acid, 4,4-stilbenedicarboxylic acid, 4,4-biphenyldicarboxylic acid, orthophthalic acid, 2,6-naphthalene dicarboxylic acid, bisbenzoic acid, bis(p-carboxylphenyl) methane, anthracene dicarbonic acid, 4,4-diphenyletherdicarboxylic acid, 4,4-diphenoxyethane dicarbonic acid, adipic acid, sebacic acid, azelaic acid, dodecane diacid, 1,3-cyclohexane dicarboxylic acid, 1,4-cyclohexane dicarboxylic acid, and the like. These copolymerizable dicarboxylic acids may be used alone or in a combination of two or more appropriately selected from the exemplified compounds.

On the other hand, the copolymerizable glycol may include ethylene glycol, 1,2-propylene glycol, 1,3-propanediol, 2,2-dimethyl-1,3-propanediol, trans-2,2,4,4,-tetramethyl-1,3-cyclobutane diol, cis-2,2,4,4,-tetramethyl-1,3-cyclobutane diol, neopentylglycol, 1,5-pentanediol, 1,6-hexanediol, 1,4-cyclohexanedimethanol, 1,3-cyclohexanedimethanol, decamethylene glycol, cyclohexanediol, p-xylenediol, bisphenol A, tetrabromobisphenol A, tetrabromobisphenol A-bis(2-hydroxyethylether), and the like. These copolymerizable glycols may be used alone or in a combination of two or more appropriately selected from the exemplified compounds.

In addition, the polybutylene terephthalate resin may have an intrinsic viscosity of 0.7 to 1.5 dl/g, which is measured according to ASTM D2857, in order to sufficiently secure the impact resistance of a molded product using the thermoplastic resin composition.

The polybutylene terephthalate resin according to an embodiment may be included in an amount of 20 wt% to 30 wt%, for example, 22 wt% to 28 wt%, based on 100 wt% of a base resin. When the polybutylene terephthalate resin is included within the range, the thermoplastic resin composition has excellent chemical resistance.

On the other hand, when the polybutylene terephthalate resin is included in an amount of 20 wt% or less based on 100 wt% of the thermoplastic resin composition, chemical resistance of a molded product manufactured by using the thermoplastic resin composition may be deteriorated. In addition, when the polybutylene terephthalate resin is included in an amount of 30 wt% or more, heat resistance and low temperature impact resistance of the product may be deteriorated, and color stains may also occur thereon.

### (C) Polyethylene Terephthalate Resin

The polyethylene terephthalate resin may include polyethylene terephthalate (PET), polytetramethylene glycol (PTMG), polypropylene glycol (PPG), a copolymer of the polyethylene terephthalate (PET) with an aliphatic polyester or aliphatic polyamide, and a combination thereof.

For example, the polyethylene terephthalate resin may be a recycled polyethylene terephthalate resin regenerated from a waste polyethylene terephthalate resin. Herein, the waste polyethylene terephthalate resin may be a previously-used polyethylene terephthalate resin such as a waste PET bottle and the like, and specifically, may be a waste polyethylene terephthalate resin used at least once.

In addition, the polyethylene terephthalate resin may have intrinsic viscosity of 0.7 dl/g to 1.5 dl/g, which is measured according to ASTM D2857, in order to sufficiently secure impact resistance of a molded product manufactured by using the thermoplastic resin composition.

The polyethylene terephthalate resin according to an embodiment may be included in an amount of 3 wt% to 7 wt%, for example, 4 wt% to 6 wt%, based on 100 wt% of the base resin. When the polyethylene terephthalate resin is included within the range, the thermoplastic resin composition has excellent heat resistance and impact resistance.

According to an embodiment, the polyethylene terephthalate resin is used with a polybutylene terephthalate resin. An embodiment includes the polyethylene terephthalate resin within the above range, and thus may supplement/improve heat resistance and impact resistance of the thermoplastic resin composition, which may be deteriorated by the polybutylene terephthalate resin.

On the other hand, when the polyethylene terephthalate resin is included in an amount of 3 wt% or less based on 100 wt% of the base resin, heat resistance may be deteriorated, and when the polyethylene terephthalate resin is included in an amount of 7 wt% or more, chemical resistance may be deteriorated.

### (D) Methyl Methacrylate-Butadiene-Styrene Graft Copolymer

The methyl methacrylate-butadiene-styrene graft copolymer according to an embodiment imparts impact resistance of the thermoplastic resin composition, while contributing to improvement of appearance characteristics of a molded product using the thermoplastic resin composition.

In an embodiment, the methyl methacrylate-butadiene-styrene graft copolymer may have a core-shell structure including a shell by graft polymerization of methyl methacrylate and/or styrene to a core made of a butadiene-based rubbery polymer component.

The methyl methacrylate-butadiene-styrene graft copolymer according to an embodiment may be prepared by adding methyl methacrylate and/or styrene to a butadiene-based rubbery polymer, and performing graft copolymerization using a conventional polymerization method such as emulsion polymerization and bulk polymerization.

The butadiene-based rubbery polymer may be selected from a butadiene rubbery polymer, a butadiene-styrene rubbery polymer, a butadiene-acrylonitrile rubbery polymer, a butadiene-acrylate rubbery polymer, and a mixture thereof.

The butadiene-based rubbery polymer core may be included in an amount of 20 to 80 wt% based on 100 wt% of the methyl methacrylate-butadiene-styrene graft copolymer.

In addition, the methyl methacrylate-butadiene-styrene graft copolymer may desirably have an average particle diameter of the butadiene-based rubbery polymer ranging from 100 to 400 nm, and, for example, 120 to 380 nm.

The methyl methacrylate-butadiene-styrene graft copolymer may be included in an amount of 3 to 7 parts by weight, for example, 4 to 6 parts by weight, based on 100 parts by weight of the base resin.

If the methyl methacrylate-butadiene-styrene graft copolymer is included in an amount of less than 3 parts by weight, the impact resistance of the molded product using the thermoplastic resin composition may be lowered, while if it exceeds 7 parts by weight, appearance characteristics of the molded product using the thermoplastic resin composition may be deteriorated.

### (E) Polyolefin-based Polymer Having Glycidyl Group

In an embodiment, the polyolefin-based polymer having the glycidyl group imparts low gloss characteristics to the thermoplastic resin composition. Accordingly, the thermoplastic resin composition according to the embodiment may realize excellent low gloss characteristics due to the polyolefin-based polymer having the glycidyl group while maintaining excellent impact resistance.

The polyolefin-based polymer having the glycidyl group may include, for example, a homopolymer of an olefin having a glycidyl group, a copolymer of an unsaturated monomer having a glycidyl group and an olefin, or a combination thereof. The copolymer may be a graft copolymer, a random copolymer, or a block copolymer.

In an embodiment, the olefin may include, for example, ethylene, propylene, 1-butene, isobutylene, 2-butene, cyclobutene, 1-pentene, 1-hexene, 4-methyl-1-pentene, 1-octene, 3-methyl -1-butene, 4-methyl-1-butene, cyclopentene, 1-hexene, cyclohexene, 1-octene, 1-decene, 1-dodecene, or a combination thereof.

In an embodiment, the unsaturated monomer having the glycidyl group may include, for example glycidylacrylate, glycidylmethacrylate, vinylglycidylether, allylglycidylether, methacrylglycidylether, 2-methylallylglycidylether, styrene-p-glycidylether, or a combination thereof.

For example, the polyolefin-based polymer having the glycidyl group may include an ethylene-glycidyl methacrylate copolymer.

The polyolefin-based polymer having the glycidyl group may be included in an amount of 1 to 5 parts by weight based on 100 parts by weight of the base resin. When the polyolefin-based copolymer having the glycidyl group satisfies the aforementioned range, the thermoplastic resin composition including the same and a molded product using the same may exhibit excellent impact resistance and low gloss characteristics.

### (F) Other Additives

In addition to the components (A) to (E), the thermoplastic resin composition according to an embodiment may further include one or more additives required in order to balance physical properties under conditions that maintain excellent moldability, heat resistance, impact resistance, and low gloss characteristics, or are required according to final uses of the thermoplastic resin composition.

Specifically, the additives may include a flame retardant, a nucleating agent, a coupling agent, a glass fiber, a plasticizer, a lubricant, an inorganic filler, an antibacterial agent, a release agent, a heat stabilizer, an antioxidant, an ultraviolet (UV) stabilizer, an antistatic agent, a pigment, a dye, and the like, and these may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

The thermoplastic resin composition according to the present invention may be prepared by a known method for preparing a thermoplastic resin composition.

For example, the thermoplastic resin composition according to the present invention may be prepared in the form of pellets by simultaneously mixing the components of the present invention and other additives and then meltkneading the same in an extruder.

A molded product according to an embodiment of the present invention may be manufactured from the aforementioned thermoplastic resin composition.

In an embodiment, the molded product may have a melt flow index of, for example, 1 to 20 g/10 min, 1 to 15 g/10 min, or 1 to 10 g/10 min, which is measured at 300 °C under a 1.2 kg load condition according to ASTM D1238.

In an embodiment, the molded product may have a heat deflection temperature (HDT) of, for example, 90 to 120 °C, 100 to 120 °C, or 100 to 115 °C, which is measured under an 18.5 kg load condition according to ASTM D648.

In an embodiment, the molded product may have a notched Izod impact strength of greater than or equal to 45 kgf cm/cm, greater than or equal to 48 kgf cm/cm, or greater than or equal to 50 kgf cm/cm, which is measured at room temperature (23 °C) according to ASTM D256.

In an embodiment, the molded product may have gloss of less than or equal to 50 GU, less than or equal to 40 GU, or less than or equal to 35 GU, which is measured at an angle of 60 degrees according to ASTM D523.

In an embodiment, the molded product may have a styrene emission amount of less than 30 ppm, less than 25 ppm, or less than 20 ppm, which is measured according to a Hyundai Motor Company MS300-55 standard using a gas chromatography mass spectrometry (GC-MS).

As described above, the thermoplastic resin composition has improved moldability, heat resistance, impact resistance, and low gloss characteristics, and has low volatile organic compound generation, and thus it may be widely applied to various molded products that are to be painted or not painted, and specifically, it may be usefully applied to automobile interior materials.

Hereinafter, the present invention is illustrated in more detail with reference to examples. These examples, however, are not in any sense to be interpreted as limiting the scope of the invention.

### Examples 1 and 2 and Comparative Examples 1 to 5

The thermoplastic resin compositions of Examples 1 and 2 and Comparative Examples 1 to 5 were prepared according to the component content ratios shown in Table 1.

In Table 1, (A), (B), and (C) which are included in the base resin, are expressed in weight percent (wt%) based on 100 wt% of the base resin, and (D), (D'), (D"), (E), (E'), and (E"), which are added to the base resin, are expressed in parts by weight based on 100 parts by weight of the base resin.

The components shown in Table 1 were dry-mixed, and quantitatively and continuously put into the feeding section of a twin-screw extruder (L/D=29, Φ =45 mm), and melted/kneaded. At this time, the barrel temperature of the twin screw extruder was set to 250 °C. Subsequently, after drying the thermoplastic resin compositions that were pelletized through a twin-screw extruder at about 80 °C for about 2 hours, specimens for measuring physical properties and verifying the gloss having 10 cm in width, 5 cm in length, and 2 mm in thickness were injection-molded by using a 6 oz injection molding machine set to a cylinder temperature of about 260 °C and a mold temperature of about 60 °C.

**(Table 1)**

| | | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|
| Base resin | (A) | 70 | 70 | 70 | 70 | 70 | 70 | 70 |
| | (B) | 25 | 25 | 25 | 25 | 25 | 25 | 25 |
| | (C) | 5 | 5 | 5 | 5 | 5 | 5 | 5 |
| (D) | | 5 | 5 | 5 | - | - | 5 | 5 |
| (D') | | - | - | - | 5 | - | - | - |
| (D") | | - | - | - | - | 5 | - | - |
| (E) | | 2 | 4 | - | 2 | 2 | - | - |
| (E') | | - | - | - | - | - | 2 | - |
| (E") | | - | - | - | - | - | - | 2 |

Descriptions of each component in Table 1 are as follows.

### (A) Polycarbonate Resin

A polycarbonate resin having a melt flow index of about 6 g/10 min measured under the condition of 300 °C and a 1.2 kg load according to the ASTM D1238 standard (Lotte Advanced Materials Co., Ltd.)

### (B) Polybutylene terephthalate Resin

A polybutylene terephthalate resin having an intrinsic viscosity of about 1.20 dl/g measured according to ASTM D2857 (Shinkong Synthetic Fibers Corp., DHK011)

### (C) Polyethylene Terephthalate Resin

A polyethylene terephthalate resin having an intrinsic viscosity of about 1.20 dl/g measured according to ASTM D2857 (Lotte Chemical Corp., BCN76)

### (D) Methyl Methacrylate-Butadiene-Styrene Graft Copolymer

A methyl methacrylate-butadiene-styrene graft copolymer having a core-shell structure obtained by graft polymerization of methyl methacrylate on a butadiene-styrene rubbery polymer core (Mitsubishi Chemical Corp., Metablen C223-A)

### (D') Acrylonitrile-Butadiene-Styrene Graft Copolymer

An acrylonitrile-butadiene-styrene graft copolymer in which a styreneacrylonitrile copolymer having a styrene:acrylonitrile weight ratio of about 71:29 forms a shell on a core (average particle diameter: about 300 nm) composed of about 45 wt% of a butadiene rubbery polymer (Lotte Advanced Materials Co., Ltd.)

### (D") Ethylene-Methacrylate Copolymer

Ethylene-methacrylate copolymer (DuPont, ELVALOY^{®} AC1330)

### (E) Ethylene-Glycidyl Methacrylate Copolymer

Ethylene-glycidyl methacrylate copolymer (Arkema, LOTADER^{®} AX8820)

### (E') Acrylic Particles

Acrylic particles (Dow, PARALOID EXL^{™} 5136)

### (E") Inorganic Filler

Talc (Imerys S.A) having an average particle diameter (D50) of about 3.9 µm measured by a laser particle size analyzer (Malvern Panalytical Ltd., Mastersizer 3000)

### Experimental Examples

The experimental results are shown in Table 2.
(1) Fluidity (g/10 min): Melt flow index (MFI) was measured according to ASTM D1238 at 250° C and a load of 2.16 kg.
(2) Heat resistance (°C): The heat deflection temperature (HDT) was measured under an 18.5 kg load condition according to ASTM D648.
(3) Impact resistance (kgf cm/cm): Notched Izod impact strength was measured at room temperature (23 °C) according to ASTM D256 for a 1/4" thick specimen.
(4) Low gloss characteristics (GU): gloss was measured at an angle of 60 degrees according to ASTM D523.
(5) Emission amount (ppm) of volatile organic compound: Styrene emission amount of the pelletized thermoplastic resin composition was measured using gas chromatography mass spectrometry (GC-MS) according to a Hyundai Motor Company MS300-55 standard.

**(Table 2)**

| | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|
| MFI | 4.5 | 3.5 | 5.5 | 4.5 | 5.5 | 5.0 | 4.5 |
| HDT | 108 | 108 | 108 | 108 | 109 | 108 | 109 |
| IZOD Impact strength (23 °C) | 50 | 55 | 45 | 40 | 35 | 30 | 10 |
| Gloss (60) | 30 | 20 | 100 | 40 | 60 | 60 | 60 |
| Styrene emission amount (ppm) | 10 | 10 | 10 | 50 | Not detect ed | 10 | 10 |

Referring to Tables 1 and 2, the thermoplastic resin compositions using constituent components in each optimal amount according to an embodiment and molded products using the same according to Examples 1 and 2 generated fewer volatile organic compounds as well as exhibited excellent moldability, heat resistance, impact resistance, and low gloss characteristics.

As described above, the present invention has been described through preferred embodiments, but a person having ordinary skill would understand easily that the present invention is not limited thereto, and various modifications and variations may be possible without departing from the concept and scope of the following claims.

## Claims

1. A thermoplastic resin composition, comprising
100 parts by weight of a base resin comprising:
(A) 65 to 75 wt% of a polycarbonate resin,
(B) 20 to 30 wt% of a polybutylene terephthalate resin, and
(C) 3 to 7 wt% of a polyethylene terephthalate resin;
(D) 3 to 7 parts by weight of a methyl methacrylate-butadiene-styrene graft copolymer; and
(E) 1 to 5 parts by weight of a polyolefin-based polymer having a glycidyl group.

2. The thermoplastic resin composition of claim 1, wherein
the (E) polyolefin-based polymer having the glycidyl group comprises
a homopolymer of an olefin having a glycidyl group, a copolymer of an unsaturated monomer having a glycidyl group and an olefin, or a combination thereof.

3. The thermoplastic resin composition of claim 2, wherein the olefin comprises ethylene, propylene, 1-butene, isobutylene, 2-butene, cyclobutene, 1-pentene, 1-hexene, 4-methyl-1-pentene, 1-octene, 3-methyl-1-butene, 4-methyl-1-butene, cyclopentene, 1-hexene, cyclohexene, 1-octene, 1-decene, 1-dodecene, or a combination thereof.

4. The thermoplastic resin composition of claim 2 or claim 3, wherein the unsaturated monomer having the glycidyl group comprises glycidyl(meth)acrylate, vinylglycidylether, allylglycidylether, methacrylglycidylether, 2-methylallylglycidylether, styrene-p-glycidylether, or a combination thereof.

5. The thermoplastic resin composition of any one of claim 2 to claim 4, wherein the (E) polyolefin-based polymer having the glycidyl group comprises an ethylene-glycidylmethacrylate copolymer.

6. The thermoplastic resin composition of any one of claim 1 to claim 5, wherein the (A) polycarbonate resin has a melt flow index of 1 to 15 g/10min, which is measured under the condition of 300 °C and a 1.2 kg load according to ASTM D1238.

7. The thermoplastic resin composition of any one of claim 1 to claim 6, wherein the (B) polybutylene terephthalate resin has an intrinsic viscosity of 0.7 to 1.5 dl/g, which is measured according to ASTM D2857.

8. The thermoplastic resin composition of any one of claim 1 to claim 7, wherein
the (D) methyl methacrylate-butadiene-styrene graft copolymer has a core-shell structure comprising
a core composed of a butadiene-based rubbery polymer, and
a shell formed by graft polymerization of methyl methacrylate and/or styrene on the core.

9. The thermoplastic resin composition of any one of claim 1 to claim 8, which further comprises at least one additive selected from a flame retardant, a nucleating agent, a coupling agent, a glass fiber, a plasticizer, a lubricant, an inorganic filler, an antibacterial agent, a release agent, a heat stabilizer, an antioxidant, an ultraviolet stabilizer, an antistatic agent, a pigment, and a dye.

10. A molded product using the thermoplastic resin composition of any one of claim 1 to claim 9.

11. The molded product of claim 10, wherein the molded product has notched Izod impact strength of greater than or equal to 45 kgf cm/cm, which is measured at room temperature (23 °C) according to ASTM D256.

12. The molded product of claim 10 or claim 11, wherein the molded product has gloss of less than or equal to 50 GU, which is measured at an angle of 60 degrees according to ASTM D523.

13. The molded product of any one of claim 10 to claim 12, wherein the molded product has a styrene emission amount of less than 30 ppm, which is measured using gas chromatography mass spectrometry (GC-MS) according to a Hyundai Motor Company MS300-55 standard.

## Patentansprüche

1. Thermoplastische Harzzusammensetzung, umfassend
100 Gewichtsteile eines Grundharzes, umfassend:
(A) 65 bis 75 Gew.-% eines Polycarbonatharzes,
(B) 20 bis 30 Gew.-% eines Polybutylenterephthalat-Harzes, und
(C) 3 bis 7 Gew.-% eines Polyethylenterephthalat-Harzes;
(D) 3 bis 7 Gewichtsteile eines Methylmethacrylat-Butadien-Styrol-Pfropfcopolymers; und
(E) 1 bis 5 Gewichtsteile eines Polymers auf Polyolefinbasis, das eine Glycidylgruppe aufweist.

2. Thermoplastische Harzzusammensetzung nach Anspruch 1, wobei
das (E) Polymer auf Polyolefinbasis, das die Glycidylgruppe aufweist, umfasst
ein Homopolymer eines Olefins, das eine Glycidylgruppe aufweist, ein Copolymer eines ungesättigten Monomers, das eine Glycidylgruppe aufweist, und eines Olefins, oder eine Kombination davon.

3. Thermoplastische Harzzusammensetzung nach Anspruch 2, wobei das Olefin Ethylen, Propylen, 1-Buten, Isobutylen, 2-Buten, Cyclobuten, 1-Penten, 1-Hexen, 4-Methyl-1-penten, 1-Octen, 3-Methyl-1-buten, 4-Methyl-1-buten, Cyclopenten, 1-Hexen, Cyclohexen, 1-Octen, 1-Decen, 1-Dodecen oder eine Kombination davon umfasst.

4. Thermoplastische Harzzusammensetzung nach Anspruch 2 oder Anspruch 3, wobei das ungesättigte Monomer, das die Glycidylgruppe aufweist, Glycidyl(meth)acrylat, Vinylglycidylether, Allylglycidylether, Methacrylglycidylether, 2-Methylallylglycidylether, Styrol-p-glycidylether oder eine Kombination davon umfasst.

5. Thermoplastische Harzzusammensetzung nach einem von Anspruch 2 bis Anspruch 4, wobei das (E) Polymer auf Polyolefinbasis, das die Glycidylgruppe aufweist, ein Ethylen-Glycidylmethacrylat-Copolymer umfasst.

6. Thermoplastische Harzzusammensetzung nach einem von Anspruch 1 bis Anspruch 5, wobei das (A) Polycarbonatharz einen Schmelzflussindex von 1 bis 15 g/10 min aufweist, der unter der Bedingung von 300 °C und einer Belastung von 1,2 kg gemäß ASTM D1238 gemessen wird.

7. Thermoplastische Harzzusammensetzung nach einem von Anspruch 1 bis Anspruch 6, wobei das (B) Polybutylenterephthalat-Harz eine intrinsische Viskosität von 0,7 bis 1,5 dl/g aufweist, die gemäß ASTM D2857 gemessen wird.

8. Thermoplastische Harzzusammensetzung nach einem von Anspruch 1 bis Anspruch 7, wobei
das (D) Methylmethacrylat-Butadien-Styrol-Pfropfcopolymer eine Kern-Schale-Struktur aufweist, umfassend
einen Kern, der aus einem gummiartigen Polymer auf Butadienbasis besteht, und
eine Schale, die durch Pfropfpolymerisation von Methylmethacrylat und/oder Styrol auf dem Kern gebildet wird.

9. Thermoplastische Harzzusammensetzung nach einem von Anspruch 1 bis Anspruch 8, die weiter mindestens ein Additiv umfasst, ausgewählt aus einem Flammschutzmittel, einem Keimbildner, einem Haftvermittler, einer Glasfaser, einem Weichmacher, einem Schmiermittel, einem anorganischen Füllstoff, einem antibakteriellen Mittel, einem Trennmittel, einem Hitzestabilisator, einem Antioxidationsmittel, einem Ultraviolettstabilisator, einem antistatischen Mittel, einem Pigment und einem Farbstoff.

10. Geformtes Produkt unter Verwendung der thermoplastischen Harzzusammensetzung nach einem von Anspruch 1 bis Anspruch 9.

11. Geformtes Produkt nach Anspruch 10, wobei das geformte Produkt eine Izod-Kerbschlagzähigkeit von größer als oder gleich 45 kgf cm/cm aufweist, die bei Raumtemperatur (23 °C) gemäß ASTM D256 gemessen wird.

12. Geformtes Produkt nach Anspruch 10 oder Anspruch 11, wobei das geformte Produkt einen Glanz von kleiner als oder gleich 50 GU aufweist, der bei einem Winkel von 60 Grad gemäß ASTM D523 gemessen wird.

13. Geformtes Produkt nach einem von Anspruch 10 bis Anspruch 12, wobei das geformte Produkt eine Styrolemissionsmenge von kleiner als 30 ppm aufweist, die unter Verwendung von Gaschromatographie-Massenspektrometrie (GC-MS) gemäß einem Standard der Hyundai Motor Company, MS300-55, gemessen wird.

## Revendications

1. Composition de résine thermoplastique, comprenant
100 parties en poids d'une résine de base comprenant :
(A) 65 à 75% en poids d'une résine polycarbonate,
(B) 20 à 30% en poids d'une résine de polybutylène téréphtalate, et
(C) 3 à 7% en poids d'une résine de polyéthylène téréphtalate ;
(D) 3 à 7 parties en poids d'un copolymère greffé méthacrylate de méthyle-butadiène-styrène ; et
(E) 1 à 5 parties en poids d'un polymère à base de polyoléfine ayant un groupe glycidyle.

2. Composition de résine thermoplastique de la revendication 1, dans laquelle
le polymère (E) à base de polyoléfine ayant le groupe glycidyle comprend
un homopolymère d'une oléfine ayant un groupe glycidyle, un copolymère d'un monomère insaturé ayant un groupe glycidyle et une oléfine, ou une combinaison de ceux-ci.

3. Composition de résine thermoplastique de la revendication 2, dans laquelle l'oléfine comprend l'éthylène, le propylène, le 1-butène, l'isobutylène, le 2-butène, le cyclobutène, le 1-pentène, le 1-hexène, le 4-méthyl-1-pentène, le 1-octène, le 3-méthyl-1-butène, le 4-méthyl-1-butène, le cyclopentène, le 1-hexène, le cyclohexène, le 1-octène, le 1-décène, le 1-dodécène, ou une combinaison de ceux-ci.

4. Composition de résine thermoplastique de la revendication 2 ou la revendication 3, dans laquelle le monomère insaturé ayant le groupe glycidyle comprend le glycidyl(méth)acrylate, le vinylglycidyléther, l'allylglycidyléther, le méthacrylglycidyléther, le 2-méthylallylglycidyléther, le styrène-p-glycidyléther, ou une combinaison de ceux-ci.

5. Composition de résine thermoplastique de l'une quelconque des revendications 2 à 4, dans laquelle le polymère à base de polyoléfine (E) ayant le groupe glycidyle comprend un copolymère éthylène-méthacrylate de glycidyle.

6. Composition de résine thermoplastique de l'une quelconque des revendications 1 à 5, dans laquelle la résine polycarbonate (A) a un indice de fluidité à chaud de 1 à 15 g/10 min, qui est mesuré dans les conditions de 300°C et d'une charge de 1,2 kg selon la norme ASTM D1238.

7. Composition de résine thermoplastique de l'une quelconque des revendications 1 à 6, dans laquelle la résine de polybutylène téréphtalate (B) a une viscosité intrinsèque de 0,7 à 1,5 dl/g, qui est mesurée selon la norme ASTM D2857.

8. Composition de résine thermoplastique de l'une quelconque des revendications 1 à 7, dans laquelle
le copolymère greffé (D) méthacrylate de méthyle-butadiène-styrène présente une structure noyau-enveloppe comprenant
un noyau composé d'un polymère caoutchouteux à base de butadiène, et
une enveloppe formée par polymérisation greffée de méthacrylate de méthyle et/ou de styrène sur le noyau.

9. Composition de résine thermoplastique de l'une quelconque des revendications 1 à 8, qui comprend en outre au moins un additif choisi parmi un ignifugeant, un agent de nucléation, un agent de couplage, une fibre de verre, un plastifiant, un lubrifiant, une charge inorganique, un agent antibactérien, un agent de démoulage, un stabilisant thermique, un antioxydant, un stabilisant ultraviolet, un agent antistatique, un pigment et un colorant.

10. Produit moulé utilisant la composition de résine thermoplastique de l'une quelconque des revendications 1 à 9.

11. Produit moulé de la revendication 10, dans lequel le produit moulé a une résistance aux chocs Izod sur barreau entaillé supérieure ou égale à 45 kgf·cm/cm, qui est mesurée à température ambiante (23°C) selon la norme ASTM D256.

12. Produit moulé de la revendication 10 ou la revendication 11, dans lequel le produit moulé a une brillance inférieure ou égale à 50 GU, qui est mesurée sous un angle de 60 degrés selon la norme ASTM D523.

13. Produit moulé de l'une quelconque des revendications 10 à 12, dans lequel le produit moulé a une quantité d'émission de styrène inférieure à 30 ppm, qui est mesurée en utilisant une chromatographie en phase gazeusespectrométrie de masse (GC-MS) selon la norme MS300-55 de Hyundai Motor Company.
